# EUROPÄISCHE PATENTSCHRIFT

(11) **EP 2 729 341 B1**
(45) Veröffentlichungstag und Bekanntmachung des Hinweises auf die Patenterteilung: **27.09.2017**
(21) Anmeldenummer: 12753685.2
(22) Anmeldetag: 21.08.2012
(51) Int. Cl.: B61C 3/00

(54) **SCHIENENFAHRZEUGSVERBAND**
RAIL VEHICLE SYSTEM
RAME FERROVIAIRE

(30) Priorität: 12.09.2011 DE 102011082516
(43) Veröffentlichungstag der Anmeldung: 14.05.2014
(73) Patentinhaber: Siemens Aktiengesellschaft, 80333 München (DE)
(72) Erfinder: LÜBBEN, Edzard, 91056 Erlangen (DE); OFFER, Martin, 91365 Weilersbach (DE); SCHLAHT, Jürgen, 90763 Fürth (DE); SCHNEIDER, Jörg, 91054 Erlangen (DE)
(86) Internationale Anmeldenummer: PCT/EP2012/066230
(87) Internationale Veröffentlichungsnummer: WO 2013/037608

(56) Entgegenhaltungen:
- EP-A1- 2 179 905
- EP-A2- 2 221 228
- DE-A1-102008 004 273
- DE-A1-102010 009 250

## Beschreibung

Die Erfindung betrifft einen Schienenfahrzeugsverband mit einem Satz von Wagen, die zum Transport von Passagieren vorgesehen sind, wobei der Satz zwei Endwagen, zumindest einen antriebslosen Mittelwagen und zumindest einen als Traktionswagen ausgebildeten Mittelwagen mit zumindest einer Antriebseinheit aufweist.
Ein Schienenfahrzeugsverband mit den im Oberbegriff von Anspruch 1 definierten Merkmalen ist aus der EP-A1-2 179 905 bekannt. Bei heutigen Ausbildungen von Triebzügen ist eine Traktion, die über zumindest einen in einem Mittelwagen angeordneten Antrieb erfolgt, weit verbreitet. So kann in einem Schienenfahrzeugsverband zwischen antriebslosem Mittelwagen und einem mit einem Antrieb versehenen Mittelwagen - auch Traktionswagen genannt - unterschieden werden. Bezüglich der Bereitstellung einer Leistung für den Antrieb des Traktionswagens wird das Prinzip der verteilten Traktion angewendet, indem die für den Antrieb benötigten Komponenten der Traktions- und Hochspannungsausrüstung über mehrere Wagen im Zugverband verteilt sind.

Dies weist den Nachteil auf, dass eine Skalierung der Traktionsleistung nur durch Einstellen von mehreren Wagen erreicht werden kann.

Der Erfindung liegt die Aufgabe zugrunde, eine erhöhte Flexibilität in der Zusammenstellung eines Schienenfahrzeugsverbands, insbesondere im Hinblick auf eine verbesserte Skalierbarkeit der Traktionsleistung, zu erreichen.

Hierzu wird vorgeschlagen, dass der Traktionswagen eine für die Antriebseinheit vorgesehene Leistungsversorgungseinheit umfasst, die wenigstens eine Spannungstransformationseinheit und eine Stromrichtereinheit aufweist. Hiermit können Komponenten der Leistungsversorgungseinheit, die für einen Betrieb der Antriebseinheit unabdingbar sind, im Traktionswagen konzentriert werden. Die Traktionsleistung kann demnach durch Hinzufügen bzw. Entfernen eines Traktionswagens in der vorgeschlagenen Ausführung besser als bei einer verteilten Traktion angepasst werden, wodurch eine besonders hohe Skalierbarkeit dieser Traktionsleistung erreicht werden kann. Durch den Einsatz mehrerer Traktionswagen im Schienenfahrzeugsverband kann in einem Redundanzfall ein wesentlicher Anteil der verfügbaren Leistung aufrecht erhalten werden, wobei vorgeschriebene Forderungen (insbesondere in der Form von internationalen Normen) in vollem Umfang eingehalten werden können. Es können besonders vorteilhaft mehrere Traktionswagen hintereinander gestellt werden.

Durch die Konzentration der für die Antriebseinheit eines Traktionswagens notwendigen Komponenten in diesem Traktionswagen kann außerdem die Flexibilität im Einsatz der antriebslosen Mittelwagen erhöht werden, da diese - im Gegensatz zum Prinzip der verteilten Traktion - vorzugweise solche Komponenten nicht aufweisen. Durch den flexiblen Einsatz von antriebslosen Mittelwagen kann eine große Auswahl an verschiedenen Zuglängen erreicht werden.

Unter einer "Leistungsversorgungseinheit" für die Antriebseinheit soll insbesondere eine Einheit verstanden werden, die dazu vorgesehen ist, eine für den Betrieb der Antriebseinheit notwendige, insbesondere variable Leistung bereitzustellen. Hierzu weist die Leistungsversorgungseinheit die Stromrichtereinheit auf, die zum Einstellen der Eigenschaften - wie insbesondere Frequenz und/oder Spannung - elektrischer Ströme gemäß einem Leistungsbedarf der Antriebseinheit dient. Bekannte Ausführungen aus dem Stand der Technik basieren auf dem Einsatz von Leistungskomponenten mit Halbleiterschaltern, insbesondere Transistoren wie z.B. sogenannte IGBTs, wobei diese Halbleiterschalter gemäß einer Schaltstrategie gesteuert werden, die durch die abzugebende Leistung bestimmt ist. Zur Änderung einer elektrischen Hochspannung in eine für den Betrieb der Stromrichtereinheit angepasste Spannung weist die Leistungsversorgungseinheit die Spannungstransformationseinheit auf. Insbesondere dient die Spannungstransformationseinheit dazu, eine von einem externen Versorgungsnetz über einen Stromabnehmer bezogene Hochspannung in eine niedrigere Spannung umzuwandeln. Beispielsweise kann die Spannungstransformationseinheit als Transformator ausgebildet sein.

Ferner wird vorgeschlagen, dass der Schienenfahrzeugsverband zumindest eine Steuereinrichtung aufweist und der Traktionswagen eine Steuerschnittstelle, über die eine Wirkverbindung mit der Steuereinrichtung herstellbar ist, und eine Energieversorgungsschnittstelle umfasst, über welche eine Verbindung mit einem streckenseitigen Energieversorgungsnetz herstellbar ist, wobei die Antriebseinheit durch ein Zusammenwirken der Leistungsversorgungseinheit mit der Steuerschnittstelle und der Energieversorgungsschnittstelle auf autarke Weise betreibbar ist. Hierdurch ist ein Betreiben der Antriebseinheit vorteilhafterweise ausschließlich von der Wirkverbindung mit der Steuereinrichtung über die Steuerschnittstelle, von der Bereitstellung einer elektrischen Energie über die Energieversorgungsschnittstelle und von der lokalen Leistungsversorgungseinheit abhängig. Diese Einschränkung gilt vorzugsweise nur im Hinblick auf die Bereitstellung der abzugebenden Leistung, wobei weitere Schnittstellen, wie z.B. eine Bremseschnittstelle, ebenfalls im Traktionswagen vorgesehen sein können, die auf die zu erzielende Leistung jedoch nicht bezogen sind.

In einer äquivalenten Formulierung ist die Antriebseinheit für deren Betrieb von weiteren Leistungskomponenten, die außerhalb des Traktionswagens angeordnet sind, unabhängig. Hiermit kann der mit elektrischer Energie versorgte und mit Steuersignalen gespeiste Traktionswagen unabhängig vom Einsatz eines weiteren Mittelwagens angetrieben werden. Dies kann beispielsweise durch Kupplung des Traktionswagens lediglich an einem mit der Steuereinrichtung versehenen Endwagen erfolgen.

Die Steuereinrichtung ist vorzugsweise zumindest dazu vorgesehen, die Antriebseinheit in Abhängigkeit von Steuerbefehlen zu steuern, die von einem Fahrzeugführer eingegeben werden. Hierzu weist sie zweckmäßigerweise eine Schnittstelle auf, die mit einer in einem Endwagen angeordneten Bedieneinrichtung, z.B. einem Bedienpult, in Wirkverbindung steht. Ferner ist die Steuereinheit vorteilhafterweise dazu vorgesehen, automatisch Steuerbefehle für die Antriebseinheit zu erzeugen. Dies kann insbesondere in Verbindung mit Sicherheitsvorschriften erfolgen, um z.B. eine Bremsung zu zwingen, und/oder wenn die Steuereinrichtung streckenseitige Beeinflussungssignale bearbeitet.

In einer weiteren Ausführung des Schienenfahrzeugsverbands wird vorgeschlagen, dass die Endwagen antriebslos sind.

Die Funktionalität des Traktionswagens kann ferner dadurch vorteilhaft erweitert werden, dass der Traktionswagen einen Umrichter aufweist, der zur Bereitstellung einer Hilfsbetriebsleistung vorgesehen ist. Unter eine "Hilfsbetriebsleistung" soll insbesondere eine Leistung für den Betrieb von elektrischen Verbrauchern vom Traktionswagen und/oder von zumindest einem weiteren Wagen des Schienenfahrzeugsverbands verstanden werden, die von einer Antriebseinheit unterschiedlich sind.

Zur Erhöhung der Redundanz innerhalb der Antriebseinheit wird vorgeschlagen, dass die Antriebseinheit zumindest zwei Antriebsmotoren aufweist, und ein Stromrichter der Stromrichtereinheit zur Leistungsversorgung der zumindest zwei Antriebsmotoren vorgesehen ist.

In einer weiteren Ausführung des Schienenfahrzeugsverbands wird vorgeschlagen, dass die Antriebseinheit mehrere Antriebsmotoren aufweist, wobei die Anzahl der Antriebsmotoren der Anzahl der Traktionswagenachsen entspricht. Hierbei entspricht ein Paar von Antriebsmotoren vorzugsweise jeweils einem Paar von Antriebsachsen eines Drehgestells. Die Wagen weisen jeweils einen Leitungsabschnitt auf, wobei die Leitungsabschnitte im Zusammenwirken eine mit einem streckenseitigen Energieversorgungsnetz koppelbare, verbandweite Hochspannungsleitung bilden, und der Traktionswagen zumindest einen Schalter aufweist, der zur trennbaren Kopplung der Leistungsversorgungseinheit mit der Hochspannungsleitung vorgesehen ist. Hierdurch kann konstruktiv einfach eine Kopplung bzw. eine Trennung des Traktionswagens an die bzw. von der Hochspannungsversorgung des gesamten Schienenfahrzeugsverbands erfolgen. Im Fall eines Defekts der Antriebseinheit des Traktionswagens kann dieser von der Hochspannungsversorgung einfach getrennt werden, ohne dass eine Rückwirkung auf die übrigen Wagen des Schienenfahrzeugsverbands entstehen.

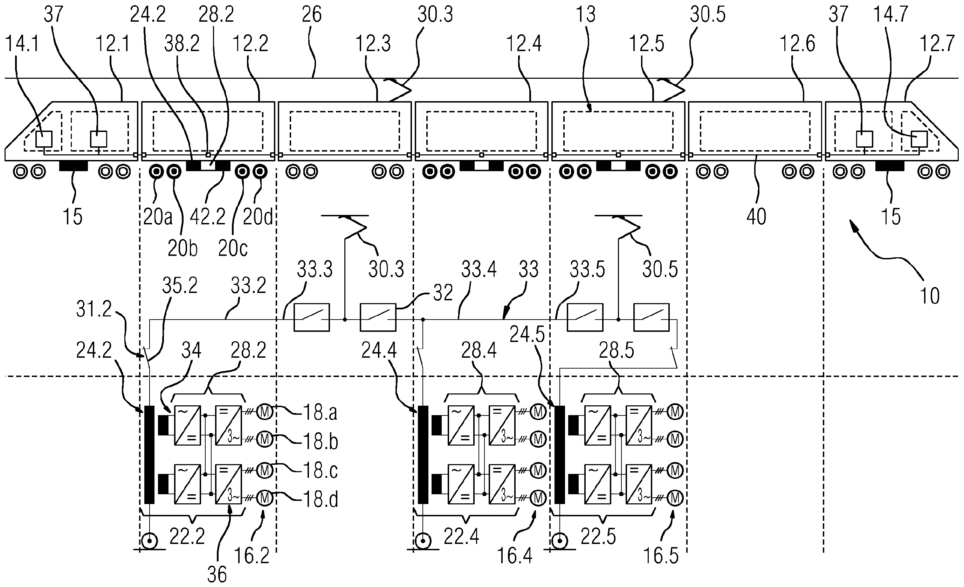

Ein Ausführungsbeispiel der Erfindung wird anhand der Zeichnung erläutert.

Die Zeichnung stellt in einer schematischen Seitenansicht einen als Triebzug ausgebildeten Schienenfahrzeugsverband 10 dar. Dieser weist einen Satz von miteinander gekoppelten Wagen 12.1 bis 12.7 auf, die jeweils zum Transport von Passagieren vorgesehen sind und hierzu jeweils einen Fahrgastraum 13 umfassen. Die Anzahl der Wagen 12 des Schienenfahrzeugsverbands 10 ist beispielhaft, wobei eine höhere oder eine geringere Anzahl denkbar ist.

Der Satz weist zwei Endwagen 12.1 und 12.7 auf, zwischen welchen die Mittelwagen 12.2 bis 12.6 angeordnet sind. In den Endwagen 12.1, 12.7 ist jeweils eine zur Bedienung durch einen Fahrzeugführer vorgesehene Bedieneinrichtung 14.1 bzw. 14.7 sowie eine Batterieeinheit 15 angeordnet. Diese weist ein nicht näher dargestelltes Bedienpult auf, mittels dessen der Fahrzeugführer Steuerbefehle eingeben kann.

Der Schienenfahrzeugsverband 10 umfasst zwei antriebslose Mittelwagen 12.3 und 12.6, wobei die Endwagen 12.1, 12.7 ebenfalls antriebslos sind. Die Mittelwagen 12.2, 12.4 und 12.5 sind jeweils mit einer Antriebseinheit 16.2, 16.4 bzw. 16.5 versehen und werden als Traktionswagen bezeichnet. Die Antriebseinheiten 16.2, 16.4 und 16.5 sind insbesondere identisch ausgebildet und umfassen jeweils vier Antriebsmotoren 18.a bis 18.d, die jeweils einer Antriebsachse 20.a bis 20.d des entsprechenden Traktionswagens zugeordnet sind. Zur Unterscheidung zwischen Antriebsachsen und antriebslosen Achsen sind die Antriebsachsen schwarz gemahlt. Die Traktionswagen 12.2, 12.4 und 12.5 verfügen jeweils über vier Antriebsachsen 20, während die antriebslosen Mittelwagen 12.3 und 12.6 sowie die Endwagen 12.1 und 12.7 ausschließlich mit antriebslosen Achsen versehen sind.

Die Antriebseinheiten 16.2, 16.4, 16.5 sind in der schematischen Schaltungsdarstellung unterhalb des Schienenfahrzeugsverbands 10 gezeigt, wobei die Funktionsblöcke der Schaltungsdarstellung den unterschiedlichen Traktionswagen über vertikale gestrichelte Linien zugeordnet sind. Der Satz von Antriebsmotoren 18.a bis 18.d bzw. kann in zwei Paaren unterteilt werden, die jeweils einem Drehgestell des jeweiligen Traktionswagens zugeordnet sind.

Der als Traktionswagen ausgebildete Mittelwagen 12.2 weist eine Leistungsversorgungseinheit 22.2 auf, die zur Bereitstellung eines elektrischen Leistung für die Antriebseinheit 16.2 vorgesehen ist. Die Leistungsversorgungseinheit 22.2 umfasst eine Spannungstransformationseinheit 24.2, die zur Umwandlung einer von einem streckenseitigen Energieversorgungsnetz 26 bezogenen Hochspannung in eine niedrigere Spannung dient, und eine Stromrichtereinheit 28.2.

Das Beziehen der elektrischen Hochspannung erfolgt über einen Stromabnehmer 30.3 und/oder 30.5, der auf dem Dach des antriebslosen Mittelwagens 12.3 bzw. des als Traktionswagen ausgebildeten Mittelwagens 12.5 angeordnet ist. In einer alternativen Ausführung ist denkbar, dass ein Mittel- und/oder Endwagen 12 mit mehreren Stromabnehmern 30 versehen ist.

Zur Trennung der Leistungsversorgungseinheit 22.2 von dem Energieversorgungsnetz 26 sind Hauptschalter 32 vorgesehen, die im Mittelwagen 12.3 und im als Traktionswagen ausgebildeten Mittelwagen 12.5 vorhanden sind.

Die Versorgung des gesamten Schienenfahrzeugsverbands 10 mit Hochspannung erfolgt mittels einer verbandweiten (in der Zeichnung nur teilweise dargestellten) Hochspannungsleitung 33, die über den ganzen Schienenfahrzeugsverband 10 verläuft. Jeder Wagen 12.1 bis 12.7 weist - vorzugsweise auf dem Wagendach - einen Leitungsabschnitt 33.1 bis 33.7 auf, wobei die Hochspannungsleitung 33 durch das Zusammenstellen des Schienenfahrzeugsverbands 10, d.h. durchs Koppeln der Wagen 12.1 bis 12.7 und daher der Leitungsabschnitte 33.1 bis 33.7 miteinander, gebildet wird. Die Hauptschalter 32 stellen hierbei eine Schnittstelle zwischen dem Energieversorgungsnetz 36 und der Hochspannungsleitung 33 dar.

Der Traktionswagen 12.2 weist eine Energieversorgungsschnittstelle 31.2 auf, die zur Herstellung einer Wirkverbindung der Leistungsversorgungseinheit 22.2 mit dem Energieversorgungsnetz 26 dient. Hierbei umfasst die Energieversorgungsschnittstelle 31.2 einen Schalter 35.2, durch den der Traktionswagen 12.2 an die Hochspannungsleitung 33 und daher ans Energieversorgungsnetz 26 angeschlossen bzw. von diesen Elementen getrennt werden kann. In einem Fehlerfall kann der Traktionswagen 12.2 von der Hochspannungsleitung 33 abgetrennt werden, ohne das nachteilige Konsequenzen für die übrigen Wagen 12 des Schienenfahrzeugsverbands entstehen.

Die Stromrichtereinheit 28.2 weist einen ersten Stromrichter 34 und einen zweiten Stromrichter 36 auf. Der erste Stromrichter 34 ist zur Versorgung eines ersten Paares von Antriebsmotoren 18.a, 18.b vorgesehen, während der zweite Stromrichter 36 einem zweiten Paar von Antriebsmotoren 18c, 18d zugeordnet ist. Der erste Stromrichter 34 kann bei Bedarf - z.B. bei einem Ausfall des zweiten Stromrichters 36 - dem zweiten Paar von Antriebsmotoren 18c, 18d zugeordnet werden. Dies gilt dementsprechend auch für den zweiten Stromrichter 36, der dem ersten Paar von Antriebsmotoren 18.a, 18.b zuordenbar ist.

Der Schienenfahrzeugsverband 10 weist zumindest eine Steuereinrichtung 37 auf, die zur insbesondere zugweiten Verteilung von Steuerbefehlen für den Betrieb der Antriebseinheiten 16, insbesondere der Antriebseinheit 16.2 vorgesehen ist. Der als Traktionswagen ausgebildete Mittelwagen 12.2 weist hierbei eine Steuerschnittstelle 38.2 auf, durch welche die Leistungsversorgungseinheit 22.2 mit der Steuereinrichtung 37 verbindbar ist. Dies erfolgt mittels einer zugweiten Steuerleitung 40, die z.B. einem Fahrzeugbus entspricht, welche die Steuereinrichtung 37 mit der Steuerschnittstelle 38.2 des Traktionswagens verbindet. Es können - wie in der Figur beispielhaft dargestellt - mehrere Steuereinrichtungen 37 vorhanden sein. In der betrachteten Ausführung ist eine Steuereinrichtung 37 jeweils in den Endwagen 12.1, 12.7 angeordnet. Die Steuereinrichtungen 37 stehen jeweils mit der Bedieneinrichtung 14.1 bzw. 14.7 über die Steuerleitung 40 in Wirkverbindung, wodurch Steuerbefehle des Fahrzeugsführers über die Steuereinrichtung 37 und die Steuerleitung 40 für die Antriebseinheit 16.2 über die Steuerschnittstelle 38.2 zur Verfügung gestellt werden. Die Steuereinrichtung 37 steht ferner in Wirkverbindung mit einer nicht näher gezeigten Einrichtung zur Fahrassistenz, die Steuerbefehle eines streckenseitigen Beeinflussungssystems empfängt und bearbeitet.

Die Antriebseinheit 16.2 des Traktionswagens ist mittels der Leistungsversorgungseinheit 22.2 völlig autark betreibbar, indem alle Komponenten der Leistungsversorgungseinheit 22.2, die zum Betrieb der Antriebseinheit 16.2 notwendig sind, ausschließlich lokal im Traktionswagen angeordnet sind. Hierbei werden diese Komponenten mittels Steuersignalen gesteuert, die von der Steuereinrichtung 37 erzeugt und über die zugweite Steuerleitung 40 sowie die Steuerschnittstelle 38.2 an die Leistungsversorgungseinheit 22.2 übermittelt werden, und sie werden mit einer über die Energieversorgungsschnittstelle 31.2 bezogene elektrische Energie versorgt.

Der Traktionswagen umfasst außerdem einen weiteren Stromrichter 42.2, der zur Bereitstellung einer Hilfsbetriebsleistung vorgesehen ist. Diese Hilfsbetriebsleistung dient dazu, von der Antriebseinheit 16.2 unterschiedliche Stromverbraucher, wie z.B. Kühlaggregate, zu betreiben, die an das sogenannte Bordnetz angeschlossen sind.

Die Leistungsversorgungseinheit 22.2 mit der Spannungstransformationseinheit 24.2 und der Stromrichtereinheit 28.2 sowie der weitere Stromrichter 42.2 sind im Traktionswagen unterflur angeordnet.

Die als Traktionswagen ausgebildeten Mittelwagen 12.4 und 12.5 sind - in Bezug auf die Ausbildung und die Steuerung der Leistungsversorgungseinheiten 22.4. 22.5 - identisch zum Mittelwagen 12.2 ausgebildet, sodass auf die obige Beschreibung verwiesen wird, um unnötige Wiederholungen zu vermeiden. Durch Hinzufügen bzw. Entfernen von Traktionswagen gemäß der Ausführung des Mittelwagens 12.2 kann die Traktionsleistung des Schienenfahrzeugsverbands 10 besonders einfach skaliert werden.

## Patentansprüche

1. Schienenfahrzeugsverband mit einem Satz von Wagen (12.1 - 12.7), die zum Transport von Passagieren vorgesehen sind, wobei der Satz zwei Endwagen (12.1, 12.7), zumindest einen antriebslosen Mittelwagen (12.3, 12.6) und zumindest einen als Traktionswagen ausgebildeten Mittelwagen (12.2, 12.4, 12.5) mit zumindest einer Antriebseinheit (16.2, 16.4, 16.5) aufweist, wobei der Traktionswagen eine für die Antriebseinheit (16.2, 16.4, 16.5) vorgesehene Leistungsversorgungseinheit (22.2, 22.4, 22.5) umfasst, die wenigstens eine Spannungstransformationseinheit (24.2, 24.4, 24.5) und eine Stromrichtereinheit (28.2, 28.4, 28.5) aufweist,
**dadurch gekennzeichnet, dass**
die Wagen (12.1 - 12.7) jeweils einen Leitungsabschnitt (33.1 - 33.7) aufweisen, wobei die Leitungsabschnitte (33.1 - 33.7) im Zusammenwirken eine mit einem streckenseitigen Energieversorgungsnetz (26) koppelbare, verbandweite Hochspannungsleitung (33) bilden, und der Traktionswagen zumindest einen Schalter (35.2) aufweist, der zur trennbaren Kopplung der Leistungsversorgungseinheit (22.2) mit der Hochspannungsleitung (33) vorgesehen ist.

2. Schienenfahrzeugsverband nach Anspruch 1,
**dadurch gekennzeichnet, dass**
zumindest eine Steuereinrichtung (37) vorgesehen ist und der Traktionswagen eine Steuerschnittstelle (38.2), über die eine Wirkverbindung mit der Steuereinrichtung (37) herstellbar ist, und eine Energieversorgungsschnittstelle (31.2) umfasst, über welche eine Verbindung mit einem streckenseitigen Energieversorgungsnetz (26) herstellbar ist, wobei die Antriebseinheit (16.2) durch ein Zusammenwirken der Leistungsversorgungseinheit (22.2) mit der Steuerschnittstelle (38.2) und der Energieversorgungsschnittstelle (31.2) auf autarke Weise betreibbar ist.

3. Schienenfahrzeugsverband nach Anspruch 1 oder 2,
**dadurch gekennzeichnet, dass**
die Endwagen (12.1, 12.7) antriebslos sind.

4. Schienenfahrzeugsverband nach einem der vorhergehenden Ansprüche,
**dadurch gekennzeichnet, dass**
der Traktionswagen einen Umrichter (42.2) aufweist, der zur Bereitstellung einer Hilfsbetriebsleistung vorgesehen ist.

5. Schienenfahrzeugsverband nach einem der vorhergehenden Ansprüche,
**dadurch gekennzeichnet, dass**
die Antriebseinheit (16.2) zumindest zwei Antriebsmotoren aufweist (18a, 18b), und ein Stromrichter (34) der Stromrichtereinheit (28.2) zur Leistungsversorgung der zumindest zwei Antriebsmotoren (18a, 18b) vorgesehen ist.

6. Schienenfahrzeugsverband nach einem der vorhergehenden Ansprüche,
**dadurch gekennzeichnet, dass**
die Antriebseinheit (16.2) mehrere Antriebsmotoren (18a - 18d) aufweist, wobei die Anzahl der Antriebsmotoren (18a - 18d) der Anzahl der Traktionswagenachsen (20a - 20d) entspricht.

## Claims

1. Rail vehicle system comprising a set of carriages (12.1 - 12.7) which are provided for transporting passengers, wherein the set has two end carriages (12.1, 12.7), at least one driveless central carriage (12.3, 12.6) and at least one central carriage (12.2, 12.4, 12.5) which is in the form of a traction carriage and has at least one drive unit (16.2, 16.4, 16.5), wherein the traction carriage comprises a power supply unit (22.2, 22.4, 22.5) which is provided for the drive unit (16.2, 16.4, 16.5) and has at least one voltage transformation unit (24.2, 24.4, 24.5) and one current converter unit (28.2, 28.4, 28.5), **characterized in that** the carriages (12.1 - 12.7) each have a line section (33.1 - 33.7), wherein the line sections (33.1 - 33.7), in interaction, form a system-wide high-voltage line (33) which can be coupled to a track-side energy supply system (26), and the traction carriage has at least one switch (35.2) which is provided for releasably coupling the power supply unit (22.2) to the high-voltage line (33).

2. Rail vehicle system according to Claim 1, **characterized in that** at least one control device (37) is provided and the traction carriage comprises a control interface (38.2), by means of which an operative connection to the control device (37) can be established, and an energy supply interface (31.2), by means of which a connection to a track-side energy supply system (26) can be established, wherein the drive unit (16.2) can be operated in an autonomous manner by virtue of the power supply unit (22.2) interacting with the control interface (38.2) and the energy supply interface (31.2).

3. Rail vehicle system according to Claim 1 or 2, **characterized in that** the end carriages (12.1, 12.7) are driveless.

4. Rail vehicle system according to one of the preceding claims, **characterized in that** the traction carriage has a converter (42.2) which is provided for providing an auxiliary operating power.

5. Rail vehicle system according to one of the preceding claims, **characterized in that** the drive unit (16.2) has at least two drive motors (18a, 18b), and a current converter (34) of the current converter unit (28.2) is provided for supplying power to the at least two drive motors (18a, 18b).

6. Rail vehicle system according to one of the preceding claims, **characterized in that** the drive unit (16.2) has a plurality of drive motors (18a - 18d), wherein the number of drive motors (18a - 18d) corresponds to the number of traction carriage axles (20a - 20d).

## Revendications

1. Rame de véhicule ferroviaire, comprenant un jeu de voitures (12.1 à 12.7) prévues pour le transport de passagers, le jeu ayant deux voitures (12,1, 12.7), au moins une voiture (12.3, 12.6) médiane sans entraînement et au moins une voiture (12.2, 12.4, 12.5) médiane constituée en voiture de traction ayant au moins une unité (16.2, 16.4, 16.5) d'entraînement, la voiture de traction comprenant une unité (22.2, 22.4, 22.5) d'alimentation en puissance prévue pour l'unité (16.2, 16.4, 16.5) d'entraînement et ayant au moins une unité (24.2, 24.4, 24.5) de transformation de la tension et une unité (28.2, 28.4, 28.5) de convertisseur,
**caractérisée en ce que**
les voitures (12.1 à 12.7) ont chacune un tronçon (33.1 à 33.7) de ligne, les tronçons (33.1 à 33.7) de ligne formant en coopération une ligne (33) de haute tension sur la rame et pouvant être couplée à un réseau (26) d'alimentation en énergie du côté de la voie, et la voiture de traction a au moins un interrupteur (35.2) prévu pour le couplage de manière séparable de l'unité (22.2) d'alimentation en puissance à la ligne (33) de haute tension.

2. Rame de véhicule ferroviaire suivant la revendication 1,
**caractérisée en ce que**
il est prévu au moins un dispositif (37) de commande et la voiture de traction comprend une interface (38.2) de commande, par laquelle la liaison de coopération avec le dispositif (37) de commande peut être ménagée, et une interface (31.2) d'alimentation en énergie, qui peut ménager une liaison avec un réseau (26) d'alimentation en énergie du côté de la voie, l'unité (16.2) d'entraînement pouvant, par une coopération de l'unité (22.2) d'alimentation en puissance avec l'interface (38.2) de commande et l'interface (31.2) d'alimentation en énergie, fonctionner en autarcie.

3. Rame de véhicule ferroviaire suivant la revendication 1 ou 2,
**caractérisée en ce que**
les voitures (12.1, 12.7) d'extrémité sont sans entraînement.

4. Rame de véhicule ferroviaire suivant l'une des revendications précédentes,
**caractérisée en ce que**
la voiture de traction a un convertisseur (42.2) prévu pour mettre à disposition une puissance de fonctionnement auxiliaire.

5. Rame de véhicule ferroviaire suivant l'une des revendications précédentes,
**caractérisée en ce que**
l'unité (16.2) d'entraînement a (18a, 18b) au moins deux moteurs d'entraînement et un convertisseur (34) de l'unité (28.2) convertisseur est prévu pour l'alimentation en puissance des au moins deux moteurs (18.a, 18b) d'entraînement.

6. Rame de véhicule ferroviaire suivant l'une des revendications précédentes,
**caractérisée en ce que**
l'unité (16.2) d'entraînement a plusieurs moteurs (18a à 18b) d'entraînement, le nombre des moteurs (18a à 18d) d'entraînement correspond au nombre des essieux (20a à 20d) de voiture de traction.
